# EUROPEAN PATENT APPLICATION

(11) **EP 1 962 470 A2**
(43) Date of publication of application: **27.08.2008**
(21) Application number: 07253715.2
(22) Date of filing: 19.09.2007
(51) Int. Cl.: H04L 29/06

(54) **Consecutive calls**

(30) Priority: 22.09.2006 GB 0618752
(71) Applicant: Cheers International Telecom Ltd, 1-11 Glenthorne Road London W6 0LH (GB)
(72) Inventor: Samaratne, Miles, London W6 7QD (GB)
(74) Representative: Slingsby, Philip Roy

(57) **Abstract**

A method for providing communications services via a call provision unit, the method comprising connecting a first communication device to the call provision unit when an access code associated with the call provision unit is entered into the first communication device, establishing a first connection via the call provision unit between the first communication device and a second communication device when a destination code associated with the second communication device is entered into the first communication device and terminating the connection between the first communication device and the second communication device when a termination code is entered into the first communication device, wherein the first communication device remains connected to the call provision unit after entry of the termination code such that one or more further connections between the first communication device and other communication devices can be subsequently established via the call provision unit without disconnection of the first communication device from the call provision unit.

## Description

The invention relates to a method for providing communications services via a call provision unit and, in particular, to a method by which a connection can be established between a first communication device and another communication device via a call provision unit.

Telephones are well-known communication devices through which calls can be placed to other devices by entering a number associated with that device into the telephone. Many users own their own telephones, which may be arranged to operate via fixed wire networks, via a wireless network or via a mixture of both. In these cases, it is usual for the user to be registered with a service provider and to be invoiced by that service provider for the services used. Such charges may include a charge for line rental and charges for the calls placed to other devices via the telephone. Typically calls are charged on the basis of the length of the call and the destination number that was dialled (e.g. whether the call was a local, national or international call). Some service providers may also provide a pre-paid service, whereby users pay for communication services in advance and the charges for services are deducted from a pre-paid balance.

A further type of telephone is the payphone or public telephone. In this case, there is no pre-existing arrangement between the user and the service provider. Instead, the user inserts payment into the telephone, thereby paying upfront for each call. Typically, a minimum payment must be inserted into the telephone before a call will be connected to a destination number. Thereafter, the ongoing cost of the call is deducted from the balance of the payment entered into the telephone. If that balance reaches zero, the call is terminated. Typically, payment can be made to a pay telephone using cash, credit card, debit card etc.

Not all telephone numbers can be accessed from any type of telephone. For example, there are some telephone numbers that cannot be accessed using payphones.

One disadvantage of payphones is that each call costs at least the minimum payment, even if the call is of short duration and would normally be expected to cost less than that amount (e.g. if the user were registered with a service provider and were using their own telephone rather than a payphone). None of the minimum payment is made available to the user after termination of the call. This is especially disadvantageous when a user wishes to make multiple calls, since even if the duration of each individual call is very short the user is still obliged to pay the minimum payment for each call.

A second disadvantage of payphones is that users are not able to access the usual promotional offers that are made available to those who are registered with a service provider. For example, users who are registered with a service provider may be provided with cheaper calls as a "reward" for having previously made calls having a predetermined duration at the usual charging rate. It would be advantageous if such offers could also be made available to users of payphones. However, a payphone user is not registered with a service provider and therefore cannot be associated with their previous call record by conventional means. Also, such a user may not always use the same payphone and so the user's call record should preferably be independent of a specific telephone.

The disadvantage of a call record being associated with a particular communication device or user identity is one that also affects users of fixed line telephones and mobile telephones, i.e. users that are registered with a service provider. In the case of these users any "rewards" that they may have earned through their previous record of calls made is linked to a specific telephone or to a specific user identify (e.g. via a SIM card). However, it may not always be convenient for users to use the same telephone or to use the same identity to identify themselves to a service provider. For example, a user might have forgotten their mobile telephone and have to use a payphone to make a call. In such a situation, it would be advantageous to the user to be able to make use of any promotional benefits that they have previously earned. It would therefore be advantageous to be able separate a user's calling record from a specific identity that is registered with a service provider.

There is therefore a need for an improved method of providing communication services to users.

According to a first embodiment of the invention, there is provided a method for providing communications services via a call provision unit, the method comprising connecting a first communication device to the call provision unit when an access code associated with the call provision unit is entered into the first communication device, establishing a first connection via the call provision unit between the first communication device and a second communication device when a destination code associated with the second communication device is entered into the first communication device and terminating the connection between the first communication device and the second communication device when a termination code is entered into the first communication device, wherein the first communication device remains connected to the call provision unit after entry of the termination code such that one or more further connections between the first communication device and other communication devices can be subsequently established via the call provision unit without disconnection of the first communication device from the call provision unit.

Preferably connections are subsequently established via the call provision unit by repeatedly performing the steps of establishing a connection between the first communication device and another communication device and terminating the established connection.

The method may also comprise monitoring the duration of the first and further connections established via the call provision unit between the first communication device and other communication devices and permitting a connection between an originating communication device and a destination communication device to be established via a call provision unit in dependence on the combined duration of the first and further connections.

Preferably the first and further connections are charged at a relatively high charging rate and the permitted connection between the originating communication device and a destination communication device is charged at a relatively low charging rate.

A connection between an originating communication device and a destination communication device may be permitted to be established for a predetermined access time, the predetermined access time being dependent on the combined duration of the first and further connections.

The method may comprise communicating access information to the first communication device over the connection between the call provision unit and the first communication device in dependence on the combined duration of the first and further connections. This may involve identifying that the combined duration of the first and further connections has exceeded a predetermined time and communicating access information associated with that predetermined time to the first communication device.

The method may further comprise terminating a connection between the first communication device and another communication device; and following that termination, communicating access information over the connection between the first communication device and the call provision unit. The step of terminating the connection may be performed by the call provision unit responsive to an identification that the combined duration has exceeded a predetermined time or responsive to a predetermined code being entered into the first communication device.

The access information communicated to the first communication device may include an access code and/or security code for accessing communications services of a call provision unit associated with that access code and/or security code. The access code and/or security code are preferably associated with a predetermined access time and the call provision unit associated with that access code and/or security code is preferably arranged to permit a connection of said predetermined access time to be established between an originating communication device and a destination communication responsive to the access code and/or security code being entered into the originating communication device.

Preferably the method further comprises connecting an originating communication device to a call provision unit when an access code associated with the call provision unit is entered into the originating communication device, verifying that a security code entered into the originating communication device is valid and, if the security code is found to be a valid security code, establishing a connection between the originating communication device and a destination communication device when a destination code associated with the destination communication device is entered into the originating communication device.

Preferably the access code and/or security code is associated with a predetermined access time and the method further comprises monitoring the duration of the connection between the originating communication device and the destination communication device and, if the connection is determined to have exceeded the predetermined access time, terminating the connection between the originating communication device and the destination communication device.

The method may further comprise storing a list of valid security codes at the call provision unit associated with that security code, wherein the step of verifying comprises searching the list of valid security codes for the security code entered into the originating communication device and treating the security code entered into the originating communications device as valid if it is contained in the list of valid security codes. A security code that is communicated as access information to the first communication device may be entered to the list of valid security codes and stored as part of that list. The method may include deleting a security code from the list of valid security codes after the code is entered into the first communications device and found to be valid.

The method may include determining the charging rate for a connection between an originating communication device and a destination communication device in dependence on the access code and/or security code entered into the originating communication device and charging the user for the connection in accordance with that charging rate. The charging rate for the first and further connections between the first communication device and other communication devices may be determined in dependence on the destination code entered into the first communication device.

Preferably the steps of establishing, terminating, monitoring, communicating, verifying and storing are performed by the call provision unit.

According to a second embodiment of the invention, there is provided a call provision unit for providing communications services, the call provision unit being arranged to establish a connection with a first communication device to the call provision unit when an access code associated with the call provision unit is entered into the first communication device, establish a connection via the call provision unit between the first communication device and a second communication device when a destination code associated with the second communication device is entered into the first communication device, terminate the connection between the first communication device and the second communication device when a termination code is entered into the first communication device, wherein the call provision unit remains connected to the first communication device after said termination and establish a connection between the first communication device and another communication device when a destination code associated with the other communication device is entered into the first communication device.

The invention will now be described by way of example, with reference to the accompanying drawings, in which:
Figure 1 shows a method for establishing consecutive calls via a call provision unit according to an embodiment of the invention;
Figure 2 shows a communications network that is suitable for implementing embodiments of the invention;
Figure 3 shows a method for monitoring consecutive calls via a call provision unit according to an embodiment of the invention;
Figure 4 shows a method for accessing communications services earned as a "reward";
Figure 5 shows a typical phonecard; and
Figure 6 shows a method for establishing consecutive calls via a call provision unit using the access information printed on a typical phonecard.

According to embodiments of the invention, communication services can be accessed by dialling an "access" phone number on a communication device. By dialling the access number, the communication device is connected to a call provision unit associated with a service provider. The user is then invited to enter a destination number for a call. The call provision unit connects the communication device to another device, which is associated with the dialled destination number. According to embodiments of the invention, this call may then be terminated by entering a predetermined termination code into the communication device. This differs from existing methods of terminating a call as it is only the connection between the communication device and the destination number that is terminated. The connection between the communication device and the call provision unit remains, and thus further calls can be placed between the communication device and other destination devices via the call provision unit by entering the appropriate destination numbers into the communication device.

One advantage of the above method is that it enables consecutive calls to be placed via a payphone without requiring the user being required to pay the minimum charge for each individual call. Instead, the minimum charge need only be paid once as the payphone does not recognise each of the consecutive calls as individual calls but only recognises a single call to the call provision unit.

For example, in an existing payphone, if a user inserts fifty pence and dials a destination number then the payphone recognises that the money inserted by the user exceeds the minimum charge of thirty pence and so the call is connected to the destination number. If the user terminates the call by hanging up then the payphone typically retains the user's fifty pence, even if the call cost less than that amount. If the user wishes to place a further call, then rather than terminating the original call by hanging up he may press the "next call" button. The next call button terminates the original call and, if the cost of that call did not exceed the minimum call charge, subtracts that minimum charge from the amount inserted by the user. So, in this example, thirty pence would be subtracted from the user's balance of fifty pence, leaving a remaining balance of twenty pence. As the remaining balance is less than the minimum amount needed to place a call, the user would then need to insert a further ten pence to be able to place a further call. Therefore, for example, if the user wished to place two calls via the payphone to non-freephone numbers, those calls would cost a minimum of sixty pence, regardless of how long they lasted.

Embodiments of the invention differ from the above example in that the user places the call to a destination number via a call provision unit. When the user wishes to make consecutive calls, rather than hanging up the original call or pressing the "next call" button, the user dials a termination code that signals the call provision unit to terminate the connection between the user's communication device and a destination device. The user's communication device therefore remains connected to the call provision unit, which enables the user to place further calls via the call provision unit. Thus, in the example described above, the user can terminate the original call without having the minimum charge deducted by the payphone and place a call to the next destination number using the balance remaining from the first call. Therefore, if the calls are relatively short or are charged at a relatively low charging rate, the user may be able to make two or more calls from his original fifty pence.

Although the above method has been principally described with reference to payphones, it should be understood that the invention is applicable to any other type of communication device. The embodiments of the invention described above would, for example, be equally advantageous for users who are registered with a service provider that imposes a minimum charge for any call made via the user's mobile telephone or fixed line telephone.

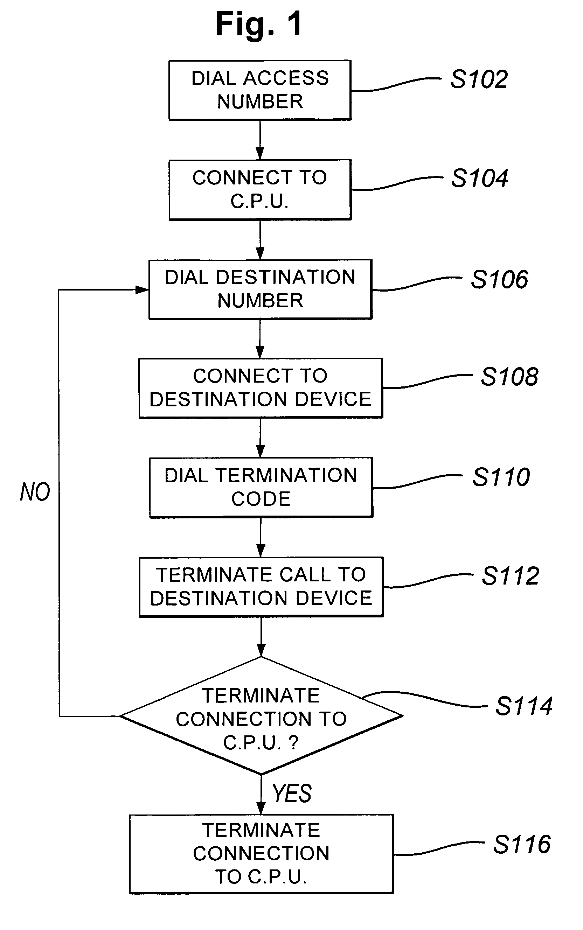

The method according to embodiments of the invention is illustrated in figure 1. In step S102 the access number for the call provision unit is entered by the user into a communication device. In response, the communication device is connected to the call provision unit associated with that access number in step S104. In step S106, a destination number is entered into the communication device. In response, the communication device is connected to the communication device associated with that destination number in step S108. A termination code is entered into the communication device in step S110. The termination code could be, for example, # #. The entry of the termination code causes the call provision unit to terminate the connection between the communication device and the destination device in step S112. The connection between the communication device and the call provision unit is retained such that the user can decide in step S114 whether to terminate the connection between the communication device and the call provision unit or whether to place a further call to another communication device. If the user decides in step S114 to terminate the connection to the call provision unit then the user may end the call as normal, e.g. by hanging-up, in step S116. If the user decides not to terminate the connection then the user may enter a further destination number into the communication device such that the method returns to step S106.

Preferably two or more connections are consecutively established via the call provision unit.

In some embodiments of the invention, the call provision unit may require a PIN number or security code to be correctly entered before a connection is established with a destination device. Entering such a PIN number would typically occur between steps S102 and S104 shown in figure 1.

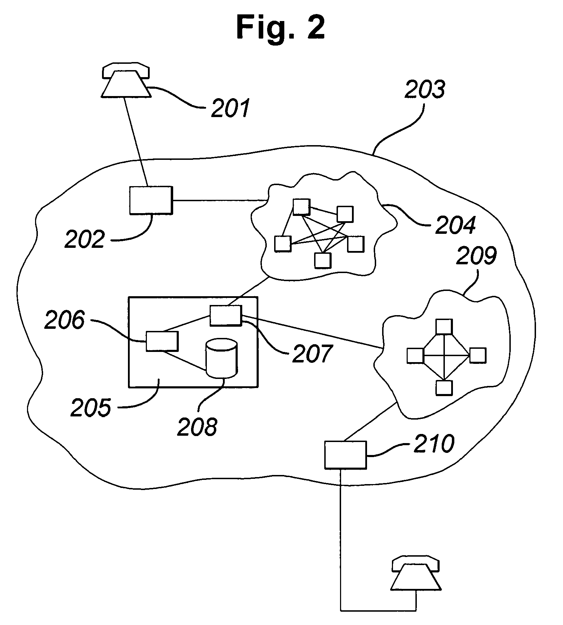

A suitable telecommunications system for implementing this kind of arrangement is illustrated in figure 2. Figure 2 illustrates an initiating telephone 201. When the user dials the access number for the call provision unit 205, the call is connected to the local exchange 202 where a connection is made to a network 204. The call is routed via a series of switches in the network 204 to the call provision unit 205. The user then enters the destination number and the call provision unit routes the call to the local exchange 210 of the destination telephone via the network 209.

Networks 204 and 205 are shown as different networks for the purposes of example only. The networks may be wireless or wired, and could be e.g. a conventional telephone network or the internet.

The call provision unit 205 typically comprises a controller 206, a router 207 and a database 208. In figure 2 these functional units have been illustrated as separate components. However, this is for the purposes of example only and the functions could be performed by a single piece of apparatus. The router connects the call provision unit to at least one communications network and the database stores information such as access and PIN numbers. The controller controls the operation of the call provision unit. For example, the controller may prompt the user to enter a PIN number (if being used) and to enter the destination number for a call. The controller may check the database to verify that any entered PIN is valid for the access number which the user dialled. The controller may also terminate a call in response to a predetermined termination code being entered into the communication device. Such a termination may cause the controller to prompt the user to enter a new destination number into the communication device.

One difficulty with allowing consecutive calls to be placed via the call provision unit is that those calls may have to be charged at different rates, depending on the destination number that is dialled. The controller is therefore preferably arranged to determine the charging rate that should be applied to each of the consecutive connections based on the destination number that is dialled by the user. The controller should preferably also be capable of changing the charging rate as the user terminates a call to one destination and establishes a new call to a different destination. The charge for the call may be imposed by the call provision unit on an ongoing basis (e.g. if a payphone is being used or if the charge is to be deducted from a pre-paid balance). Alternatively, the charge may be invoiced to the user (e.g. where the user is registered with the service provider).

A further advantage of embodiments of the invention is that it enables the duration of consecutive calls made via the call provision unit to be monitored. In this way, a user can be provided with promotional information related to the combined duration of consecutive calls that he has made. This promotional information can be used with different communication devices and by different users (if the original recipient of the information chooses to share it with e.g. friends or family members). The "reward" associated with a previous calling record of the user is thus separate from the identity of the user and from the identity of a specific telephone. The "reward" can also be provided to users who are not registered with a service provider and who would otherwise not typically be provided with promotional rewards.

According to one embodiment of the invention, the call provision unit monitors the duration of consecutive calls made via the call provision unit and provides the user with access information based on that combined duration. The access information could include, for example, an access number and/or security code for accessing the communications services of a call provision unit. This a user to place calls via a call provision unit associated with the access information. Typically those calls will be charged at a reduced charging rate, so that the access information acts as a "reward" for the user having previously made calls of a predetermined duration or which cost a predetermined amount.

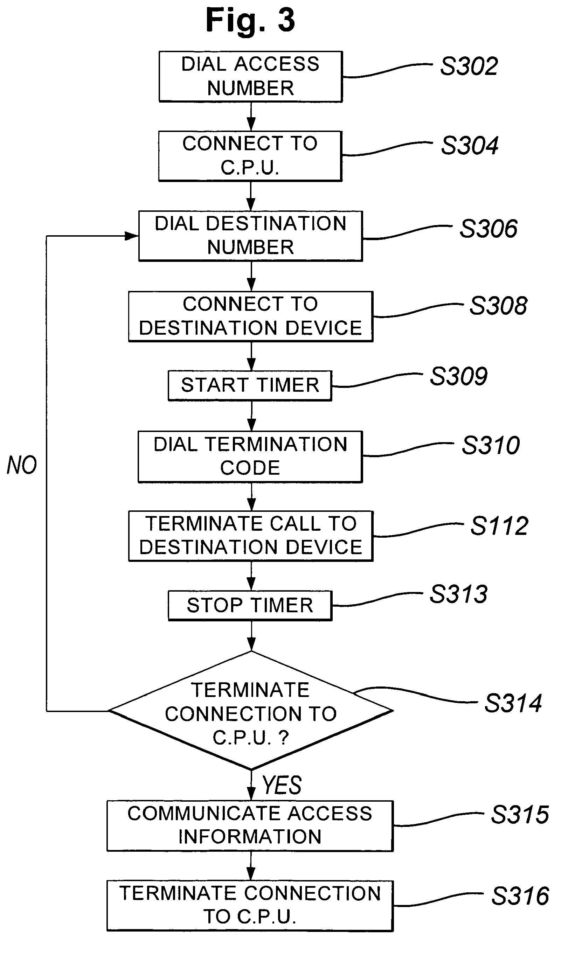

The method of establishing consecutive connections in which the duration of those connections is monitored is shown in figure 3. Even numbered steps S302 to S316 are identical to steps S102 to S116 shown in figure 1. In step S309, the call provision unit starts a timer to monitor the length of the call to the destination number. In step S313, after that connection is terminated, the timer is stopped. In step S315, as the user has decided to terminate the connection with the call provision unit rather than placing a further call, the call provision unit communicates the appropriate access information to the communication device.

In step S314, the call provision unit may query the user as to whether he wants to place a further call or whether he wishes to receive the access information he has earned from the consecutive calls placed so far. If the user selects to receive the access information, the call provision unit may instruct the user to hang-up the call after that information has been communicated or the call provision device may itself be arranged to terminate the connection between it and the communication device after it has communicated the access information. Alternatively, the call provision unit may give the user the option of placing further calls via the call provision unit. In this situation, the call provision unit preferably resets the combined duration to zero so that the previous consecutive calls do not count towards the total duration of any further calls. One further option is for the call provision unit to just inform the user of the rewards he has earned so far (e.g. that the user is entitled to a 5 min call at the lower rate) rather than communicating the access information itself. The user may then elect either to place a further call to increase the "reward" or to receive the access information for the "reward" that has already been earned.

Rather than terminating a call with a destination number by entering the termination code to receive the access information, the call provision unit may be responsive to another predetermined code entered into the communication device to interrupt the call to the destination number. This code could be e.g. #9. This interruption may take the form of terminating the connection between the communication device and the destination number or only interrupting the call, which can then be resumed after the call provision unit has communicated the appropriate information to the user. If the call has been terminated, the call provision unit is suitably arranged to communicate the access information earned so far to the user. If the call is only interrupted, it may be more appropriate for the call provision unit to inform the user of the rewards earned so far, so that the call can then be resumed without having to restart the "reward earning" process.

In one embodiment, the call provision unit may itself be arranged to interrupt or terminate the call between the communication device and the destination device to communicate access information or to inform the user of rewards earned so far. The call provision unit might be arranged to perform such an interruption or termination responsive to a determination that the combined duration of the calls made so far via the call provision unit has exceeded a predetermined time threshold.

The call provision unit may be arranged to stop the timer monitoring the duration of a call with a destination number if the call is interrupted.

The functions of monitoring the combined duration or combined cost of consecutive calls, determining if that combined cost or duration fulfils certain predetermined conditions and providing appropriate access information to a user if the combined duration does fulfil those conditions may be suitably performed by the controller 206 shown in figure 2. For example, the controller may start a timer when the first call is established by the communication device, stop the timer whenever the termination code is entered into the communication device and restart the timer whenever a call to a new destination number is established. Alternatively, the controller may start a new timer with each call to a destination number and sum each of the individual durations to obtain the combined duration of the consecutive connections.

The controller may determine that access information should be communicated to the user of the communication device as a "reward" if the combined duration of the consecutive connections is greater than a predetermined time. For example, the call provision unit may communicate access information to the communication device if the combined duration of the connections exceeds 20 min. The call provision unit may also be arranged to select the access information communicated to the user by comparing the combined call duration with several predetermined thresholds. For example, different access information may be communicated depending on whether the combined duration of the connections exceeds 10 min, 20 min, 30 min etc.

Rather than simply considering the combined duration of the consecutive calls, the call provision unit may take the cost of those calls into account. If all of the consecutive calls are to be charged at the same rate, then this may be straightforwardly achieved by simply applying specific set of time thresholds depending on the charging rate to be applied to the consecutive calls. This charging rate may be determined by the access number used to access the call provision unit and/or the PIN number (if any) entered into the communication device after connection to the call provision unit. The charging rate may also vary between the consecutive calls. In this scenario, the controller may be arranged to consider the total cost of the consecutive calls. For example, the controller may multiply the duration of each of the calls by the charging rate applied to each call to obtain an estimate for the total cost of the consecutive calls. The total cost may then be compared with predetermined cost thresholds in a similar manner to that described above with reference to time thresholds.

If the call provision unit is arranged to apply the same charging rate to each of the consecutive calls established via the call provision unit, then it may also be arranged to only permit calls to specific destination numbers. For example, the call provision unit may only permit consecutive calls to national destinations.

As stated above, the access information communicated to the user over the connection between the call provision unit and the communication device may suitably include an access number, a security code or both an access number and a security code. The access number and security code are preferably associated with a call provision unit. Dialling the access number preferably causes a communication device to be connected to the call provision unit associated with that access number. Entering the security code into a communication device once it is connected to a call provision unit preferably authorises the user of that device to establish connections via the call provision unit. The access number and security code may also indicate to the call provision unit the conditions that should be applied to the call.

A call provision unit may be associated with more than one access number. The access number dialled by the user may therefore signal to the call provision unit that a particular charging regime should be applied, that a PIN number should be requested, that calls to only particular destination should be permitted, that calls may only last for a predetermined duration etc. A PIN number (if any) entered into the communication device can signal to the call provision unit that the user is authorised to place calls via the call provision unit, that a particular charging regime should be applied, that calls to only particular destination should be permitted, that calls may only last for a predetermined duration etc.

Therefore, by communicating appropriate access information to the user of a communication device that has established consecutive calls via a call provision unit, the call provision unit is providing the user with the means for placing calls via that call provision unit or via a different call provision unit that will be subject to certain conditions. The access information that is communicated to the user will depend on what "reward" the user has qualified for. As a simple example, the access information may include an access number that accesses the same call provision unit but at a reduced charging rate and a security code that identifies to the call provision unit that the user has qualified to make a 10 min call at the reduced charging rate.

According to a preferred embodiment, the "reward" offered to a user is linked to the combined duration of a call or calls placed via the call provision unit, i.e. so that user is permitted to make calls at a lower charging rate for a time dependent on the duration of the original call(s). This is suitably achieved by communicating access information associated with that permitted time to the user. When this access information is used to access a call provision unit, that call provision unit recognises that the user is permitted to make a call at a predetermined charging rate for a predetermined time.

As explained above, an access code and a security code may be associated by a call provision unit with various conditions to be applied to calls established via that call provision unit. It should therefore be understood that many different combinations of access codes and/or security codes may be used to set the conditions of the "reward" for which a user has qualified. In some embodiments, the access code determines the charging rate applied to calls established via the call provision unit and the security code authorises the user to make calls at that charging rate. Each call at made using that access code may be limited to a predetermined time, e.g. 10 min. Alternatively, the security code may identify the permitted time for a call using that access code. This enables the value of the "reward" to be linked to the cost of the original consecutive calls.

Preferably the access number through which the original calls are established is a premium rate access number. The new access number communicated as a "reward" may typically be freephone, local or national rate numbers, or any number which is charged at less than premium rate. Therefore, after the user has been connected via the premium rate number for a predetermined length of time he or she is then able to place calls, such as international calls, using a number that is charged at a much lower rate.

The call provision unit may have access to a list of security codes or PIN numbers that it may allocate to users. A security code can be selected from that list to be communicated as access information. Alternatively, the call provision unit may generate a security code, e.g. by using a random number generator. When a security code or PIN is allocated to a user it is preferably added to a list of allocated security codes and deleted from the list of numbers that are available to be allocated. Different lists of allocated security codes may be stored for each permitted call duration. For example, one list may be a list of security codes allocated to users entitled to a 5 min call at the cheaper rate and another list may be security codes allocated to users entitled to a 10 min call at the cheaper rate. Alternatively, the allocated security codes may be stored together with the permitted duration corresponding to each security code.

Rather than identifying the permitted duration by the way in which a security code is stored, the security code could include a code identifying the permitted duration. For example, the security code may include a six digit code that authorises the user and a two digit code that identifies the permitted duration for that security code.

The call provision unit may have different lists of allocated, valid security codes for each access number that may be dialled to connect to the call provision unit.

Preferably the access number communicated to the user as access information accesses the same call provision unit. However, if the access number accesses a different call provision unit then this different call provision unit should be able to access the database storing lists of allocated security codes.

Each security code may be valid for a single call to a destination number or for a single connection to a call provision unit during which two or more consecutive calls to destination numbers may be made. A security code may remain valid until the permitted time associated with that security code has been used. For example, the call provision unit may keep a record of the unelapsed time corresponding to each security code. The new security code may also be active for only a short period of time, such as an hour, to encourage users to take advantage of the lower rate calls immediately. When a security code has been "used up", the security code is removed from the allocated, valid list of security codes. If a list of security codes that can be allocated to users is stored, the invalidated security code can be reinstated on that list. This method of allocating security codes means that the call provision unit can re-use security codes, as only a limited number will be allocated and therefore valid at any one time.

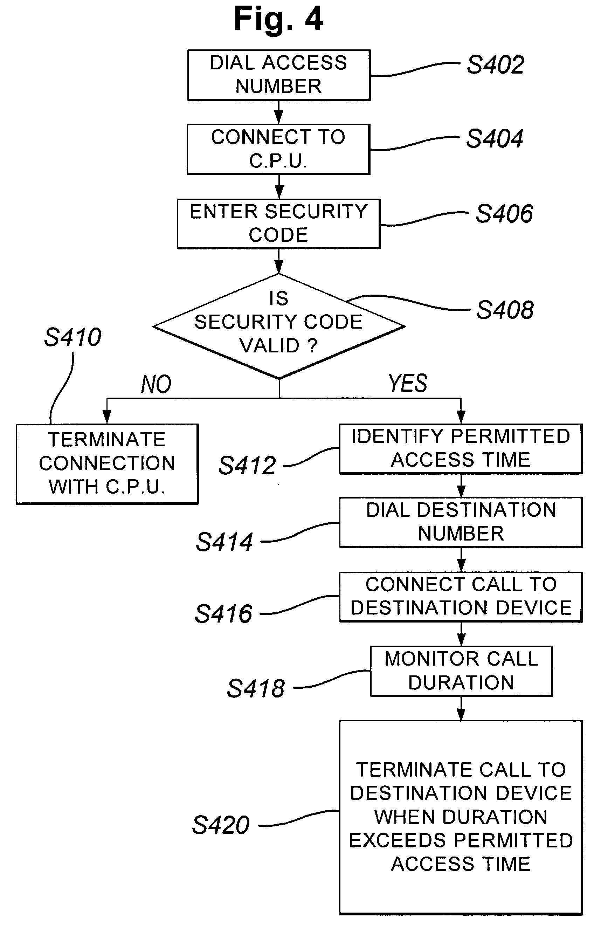

The method by which a user accesses their "reward" using the communicated access information is illustrated in figure 4. The access number is entered into the communication device in step S402 and the communication device is connected to the call provision unit in step S404. In step S406 the security code is entered. The validity of the security code is checked in step S408, e.g. by checking the list of security codes that have been allocated and are therefore valid. If the security code is not valid then the call provision unit terminates the connection between it and the communication device in step S410. If the security code is found to be valid, then the call provision unit identifies the permitted time for a call in step S412. In step S414, the user enters a destination number into the device. The call provision unit connects the communication device to the destination number in step S416 and starts monitoring the length of the call in step S416. When the call provision unit identifies that the length of the call has exceeded the permitted time it terminates the call in step S420. The call provision unit may terminate the call by terminating the connection between it and the communication device.

Embodiments of the invention may be advantageously implemented by a service provider that issues phonecards. The invention will now be described in relation to phonecards. This is for the purposes of example only. Phonecards are just one commonly used and convenient method of informing customers of the services available by dialling an access number.

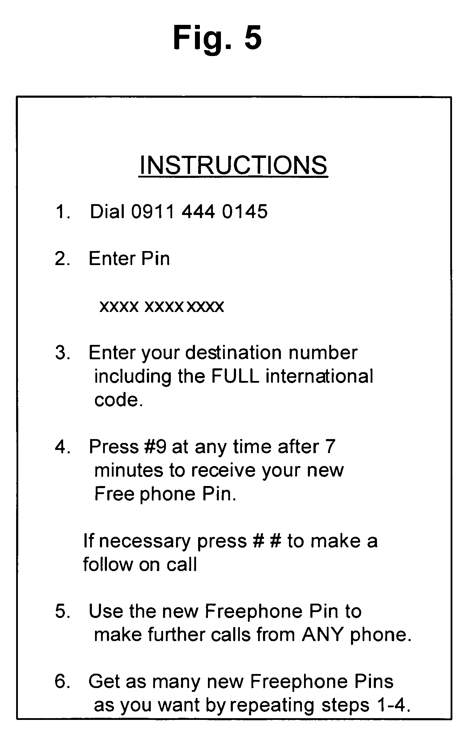

Phonecards typically have printed on them a list of calling charges for destinations worldwide and an access number, which a customer dials to initiate a call at the charge specified. An example of the instructions that may be printed on a phonecard is shown in figure 5. Typically, the access number is charged at a premium rate. The customer, having accessed the call provision unit via the access number, may be required to enter a PIN number before being prompted to enter the destination phone number. The PIN number may be printed on the card, may be chosen by the user specifically for their account with the card issuer or may have been provided by the call provision unit in during a previous call made by the user.

Phonecards may be provided to customers by the card issuer either free of charge, or for payment. If the card is free, then the cost of any calls made via the access number printed on the card is usually charged on the telephone bill of the phone with which the calls were made. If a call is made using a public payphone, then payment for the call must be made at the phone as normal e.g. using cash or credit cards. If the customer pays for the phonecard, then that payment may create a credit balance that the customer can use to make calls. Alternatively, paying for the phonecard may simply entitle the customer to make calls at a cheaper rate than that charged for calls accessed using the access number and PIN number of a phonecard that is free.

The card issuer typically has some kind of arrangement with a telecommunications operator whereby the card issuer makes a "bulk purchase" of discounted call time using the telecommunications operator's infrastructure. The card issuer then effectively sells this call time to customers by connecting calls to a destination number via the premium rate access number.

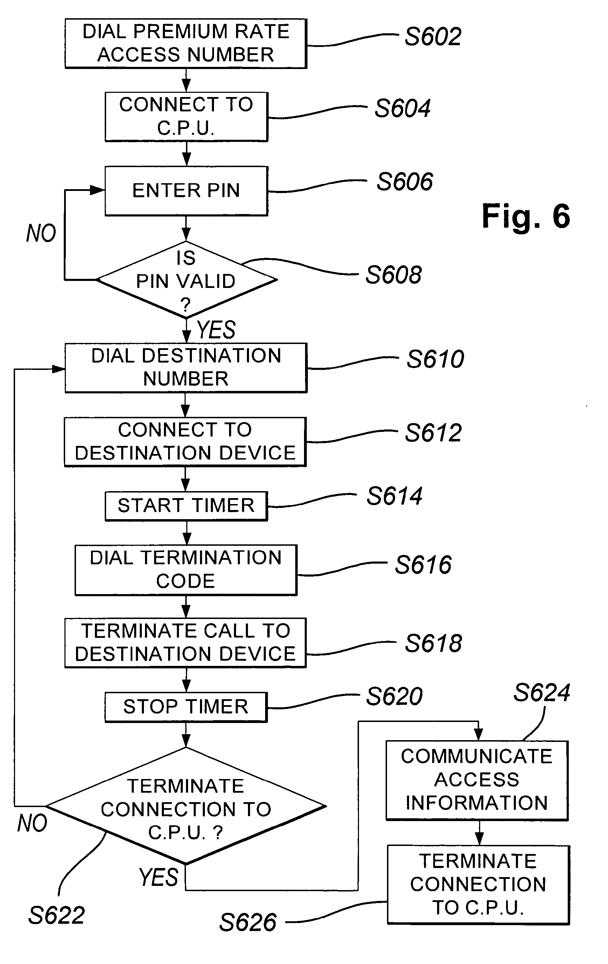

A method for accessing the communication services of a call provision unit using the information printed on a phonecard is illustrated in figure 6. The user dials a premium rate access number, which is printed on their phonecard in step S602. The call is connected to the call provision unit in step S604. The user then hears a voice prompting them to enter a PIN number. Alternatively, the phonecard may contain instructions to the user to enter the PIN number without a voice prompt, for instance immediately after the premium rate number is dialled or when a particular tone is heard through the telephone. The user enters the PIN number at step S606. The server of the card issuer checks the PIN number at step S608.

The PIN number might identify a particular account (i.e. an account associated with a particular user), a particular phonecard or a particular type of service that can be accessed using a phonecard. For example, different phonecards can be sold that provide different services/charging rates but which provide access to those services/charging rates via the same access phone number. This enables the card issuer to provide a wide variety of products to their customers without having to obtain a different access number from the telecommunications operator for each product on the market. The PIN number entered by the user can also be a factor in determining the charging rate that is to be applied to a call. For example, PIN numbers associated with phonecards for which payment is required are likely to correspond to lower charging rates than PIN numbers associated with phonecards that are free of charge. Also, some phonecards may be directed at a particular market, for example, calls to a particular country or region of the world may be available at a particularly discounted rate.

The step of checking the PIN number at step S608 in figure 5 may involve checking a database of PIN numbers, to verify that the PIN number that has been entered is valid for the access phone number that was dialled. If the PIN number is invalid, then the user may be asked to re-enter the PIN number. If the user fails to enter a valid PIN number the call may be terminated by the server of the card issuer. PIN numbers could, for example, be valid only for a predetermined length of time, e.g. every phonecard could expire by default after 360 days. The expiry period could run from the date when the type of phonecard is first marketed, from the date when a particular card is first issued to a customer or from the date when the first phone call is made using the access number printed on the phonecard.

If the PIN number is associated with a particular card, it may be used to access records of the calls etc made previously using that card. This is advantageous as it allows the card user to target a specific customer. For example, the server may store details of previous calls made using the account identified by the PIN number, in order to offer the user appropriate incentives or provide them with the benefits (e.g. cheaper calls) that they have "earned" through making calls having a predetermined length or costing a predetermined amount previously. Requiring the user to enter a PIN number can also be advantageous in verifying that the user making the call is authorised to do so. For example, in a situation where the user has a pre-paid account with the card issuer, e.g. where they paid for their card, it may be preferable for the user to have to enter a PIN number in order that unauthorised persons cannot access the credit on their account.

If the PIN number is not authorised, then the call may be terminated. Alternatively, the user may be invited to re-enter the PIN number. The user may be limited to entering the PIN number a predetermined number of times before the call is terminated or the number of times the user may re-enter the PIN may be unlimited.

The system may be arranged such that a call is connected even if a PIN number is entered incorrectly or if a PIN is not entered at all. The system may be arranged to connect calls irrespective of whether an entered PIN number is valid under all conditions or only under certain conditions. An example of such a condition is when the call has been made to a number such that a charge will be made to the initiator of the call (for instance if the number is a premium rate or national rate number or any number other than a freephone/toll-free number). The system may then permit an onward call to be made to a destination number even if no PIN number has been entered or if an invalid PIN number has been entered. The operator of the system could derive sufficient revenue from the charge made to the initiator of the call to support the cost of the onward call. In this situation if the user has not entered a correct PIN number after a certain number of attempts, or if the user fails to enter a PIN number at all, the user may be still be able to make the onward call. In such a situation the user could alternatively not be required to enter a PIN at all.

If the PIN number is authorised by the call provision unit in step S608, or if the system authorises the user to proceed without having entered a valid PIN, in the situations described above, then the user is invited to enter the destination number in step S610. The call is then connected to a network via the routing unit and routed to its destination. A further option is that the system could not require the user to enter any PIN number at all at this point.

After the call is connected in step S612, a timer is started (step S614). The method now follows the steps described earlier in relation to figure 2. At step S626 the user then hears an announcement providing a new PIN number and optionally a new access number. While the announcement is being played any digits dialled by the user are preferably ineffective i.e. so that the user cannot affect the call provision unit during this time.

After the announcement has been made the call to the call provision unit is terminated. The user can then dial the new access number (or the previous access number if no new access number is provided) and enter the new PIN number to place calls at a cheaper rate than previously, following the steps shown in figure 3. The new access number will preferably access the same call provision unit.

In a similar embodiment to that described above, the user may be offered the option of reconnecting to the previous destination, with the remainder of the call being charged at the lower rate. This means that call to the call provision unit is not terminated, and the user can reconnect to the original destination number without having to re-initiate the call using an access number and security code.

The user may make a call via the original access number and obtain a new PIN and access number an unlimited number of times.

Existing methods of providing users with rewards typically require a call provision unit to store usage records for each user of the system and to monitor these records to determine when a reward should be offered. This can require synchronisation between different databases. For example, the call provision unit may be required to store a different call usage database for each access number. In order to determine when a user is entitled to a reward, and what the "value" of any reward should be (e.g. the charging rate to which the user is entitled), the call provision unit might be required to combine the information contained in different databases with respect to a specific user. These requirements impose memory and processing constraints on the call provision unit.

Existing methods also impose an additional overhead on connection times, as the call provision unit is typically required to determine the identity of the user and check whether the user is entitled to any rewards before placing any connection between the user's communications device and a destination communications device. The call provision unit might also be required to determine the charging rate to be applied to a connection before making the connection. All of these steps add overhead to the time taken to place the connection between two communications devices and require increased processing power of the call provision unit.

An advantage of embodiments of the invention is that communicating access information to the user relieves the call provision unit of responsibility for administering the promotional reward scheme. It is no longer required to store call records associated with each user of the system or to combine different records in order to determine whether a reward should be awarded. Instead, the call provision unit according to embodiments of the invention is arranged to monitor the duration of a consecutive calls and to communicate appropriate access information as a "reward" if the consecutive calls have exceeded a predetermined length of time.

Another advantage is that the processing required of the call provision unit before connecting a first communications device to a second communications device is reduced. If a user enters the communicated access information into a communications device the call provision unit according to embodiments of the invention is automatically aware that the user is entitled to a reward, because otherwise the user would not know that information. The charging rate to be applied to a call can also be determined immediately by the call provision unit according to embodiments of the invention by means the access information entered into the communications device.

The applicant hereby discloses in isolation each individual feature described herein and any combination of two or more such features, to the extent that such features or combinations are capable of being carried out based on the present specification as a whole in light of the common general knowledge of a person skilled in the art, irrespective of whether such features or combinations of features solve any problems disclosed herein, and without limitation to the scope of the claims. The applicant indicates that aspects of the present invention may consist of any such feature or combination of features. In view of the foregoing description it will be evident to a person skilled in the art that various modifications may be made within the scope of the invention.

## Claims

1. A method for providing communications services via a call provision unit, the method comprising:
connecting a first communication device to the call provision unit when an access code associated with the call provision unit is entered into the first communication device;
establishing a first connection via the call provision unit between the first communication device and a second communication device when a destination code associated with the second communication device is entered into the first communication device; and
terminating the connection between the first communication device and the second communication device when a termination code is entered into the first communication device, wherein the first communication device remains connected to the call provision unit after entry of the termination code such that one or more further connections between the first communication device and other communication devices can be subsequently established via the call provision unit without disconnection of the first communication device from the call provision unit.

2. A method as claimed in claim 1, wherein connections are subsequently established via the call provision unit by repeatedly performing the steps of establishing a connection between the first communication device and another communication device and terminating the established connection.

3. A method as claimed in claim 1 or 2, the method further comprising:
monitoring the duration of the first and further connections established via the call provision unit between the first communication device and other communication devices; and
permitting a connection between an originating communication device and a destination communication device to be established via a call provision unit in dependence on the combined duration of the first and further connections.

4. A method as claimed in claim 3, wherein the first and further connections are charged at a relatively high charging rate and the permitted connection between the originating communication device and a destination communication device is charged at a relatively low charging rate.

5. A method as claimed in claim 3 or 4, wherein a connection between an originating communication device and a destination communication device is permitted to be established for a predetermined access time, the predetermined access time being dependent on the combined duration of the first and further connections.

6. A method as claimed in any of claims 3 to 5, the method further comprising:
communicating access information to the first communication device over the connection between the call provision unit and the first communication device in dependence on the combined duration of the first and further connections.

7. A method as claimed in claim 6, the method further comprising:
identifying that the combined duration of the first and further connections has exceeded a predetermined time; and
communicating access information associated with that predetermined time to the first communication device.

8. A method as claimed in any of claims 3 to 7, the method further comprising:
terminating a connection between the first communication device and another communication device; and following that termination:
communicating access information over the connection between the first communication device and the call provision unit.

9. A method as claimed in claim 8 as dependent directly or indirectly on claim 7,
wherein the step of terminating the connection is performed by the call provision unit responsive to an identification that the combined duration has exceeded a predetermined time.

10. A method as claimed in claim 8, wherein the step of terminating the connection is performed by the call provision unit responsive to a predetermined code being entered into the first communication device.

11. A method as claimed in any of claims 6 to 10, wherein the access information communicated to the first communication device includes an access code and/or security code for accessing communications services of a call provision unit associated with that access code and/or security code.

12. A method as claimed in any of claim 11 as dependent directly or indirectly on claim 5, wherein the access code and/or security code are associated with a predetermined access time and the call provision unit associated with that access code and/or security code is arranged to permit a connection of said predetermined access time to be established between an originating communication device and a destination communication responsive to the access code and/or security code being entered into the originating communication device.

13. A method as claimed in any preceding claim, the method further comprising:
connecting an originating communication device to a call provision unit when an access code associated with the call provision unit is entered into the originating communication device;
verifying that a security code entered into the originating communication device is valid; and, if the security code is found to be a valid security code:
establishing a connection between the originating communication device and a destination communication device when a destination code associated with the destination communication device is entered into the originating communication device.

14. A method as claimed in claim 13, wherein the access code and/or security code is associated with a predetermined access time and the method further comprises:
monitoring the duration of the connection between the originating communication device and the destination communication device; and, if the connection is determined to have exceeded the predetermined access time:
terminating the connection between the originating communication device and the destination communication device.

15. A method as claimed in any of claim 13 as dependent directly or indirectly on claim 11, the method further comprising:
storing a list of valid security codes at the call provision unit associated with that security code;
wherein the step of verifying comprises:
searching the list of valid security codes for the security code entered into the originating communication device; and
treating the security code entered into the originating communications device as valid if it is contained in the list of valid security codes.

16. A method as claimed in claim 15, the method further comprising:
entering a security code that is communicated as access information to the first communication device to the list of valid security codes; and
storing the security code as part of that list.

17. A method as claimed in any of claim 16, the method further comprising:
deleting a security code from the list of valid security codes after the code is entered into the first communications device and found to be valid.

18. A method as claimed in any preceding claim, comprising determining the charging rate for a connection between an originating communication device and a destination communication device in dependence on the access code and/or security code entered into the originating communication device and charging the user for the connection in accordance with that charging rate.

19. A method as claimed in any preceding claim, comprising determining the charging rate for the first and further connections between the first communication device and other communication devices in dependence on the destination code entered into the first communication device.

20. A method as claimed in any preceding claim, wherein the step of establishing is performed by the call provision unit.

21. A method as claimed in any preceding claim, wherein the step of terminating is performed by the call provision unit.

22. A method as claimed in any of claims 2 to 21, wherein the step of monitoring is performed by the call provision unit.

23. A method as claimed in any of claims 5 to 22, wherein the step of communicating is performed by the call provision unit.

24. A method as claimed in any of claims 13 to 23, wherein the step of verifying is performed by the call provision unit.

25. A method as claimed in any of claims 15 to 24, wherein the step of storing is performed by the call provision unit.

26. A call provision unit for providing communications services, the call provision unit being arranged to:
establish a connection with a first communication device to the call provision unit when an access code associated with the call provision unit is entered into the first communication device;
establish a connection via the call provision unit between the first communication device and a second communication device when a destination code associated with the second communication device is entered into the first communication device;
terminate the connection between the first communication device and the second communication device when a termination code is entered into the first communication device, wherein the call provision unit remains connected to the first communication device after said termination; and
establish a connection between the first communication device and another communication device when a destination code associated with the other communication device is entered into the first communication device.

27. A method substantially as herein described with reference to the accompanying drawings.

28. A call provision unit substantially as herein described with reference to the accompanying drawings.
